# EUROPÄISCHE PATENTSCHRIFT

(11) **EP 2 182 418 B1**
(45) Veröffentlichungstag und Bekanntmachung des Hinweises auf die Patenterteilung: **20.06.2012**
(21) Anmeldenummer: 09013571.6
(22) Anmeldetag: 28.10.2009
(51) Int. Cl.: G05B 19/042

(54) **Verfahren und Vorrichtung zum Zugreifen auf ein Funktionsmodul eines Automatiersierungssystems**
Method and device for accessing a function module of an automation system
Procédé et dispositif d'accès à un module de fonctionnement d'un système d'automatisation

(30) Priorität: 03.11.2008 DE 102008055660
(43) Veröffentlichungstag der Anmeldung: 05.05.2010
(73) Patentinhaber: Phoenix Contact GmbH & Co. KG, 32825 Blomberg (DE)
(72) Erfinder: Krumsiek, Dietmar, 31860 Emmerthal (DE)
(74) Vertreter: Blumbach - Zinngrebe

(56) Entgegenhaltungen:
- EP-A2- 0 825 506
- DE-A1- 10 214 539
- DE-A1-102008 014 153
- DE-A1-102008 019 040
- US-B1- 6 311 101
- US-B1- 6 799 077

## Beschreibung

Die Erfindung betrifft ein Verfahren und eine Vorrichtung zum Zugreifen auf ein Funktionsmodul eines Automatisierungssytems.

Im Bereich der industriellen Fertigungsautomatisierung und der dabei eingesetzten Automatisierungssysteme ist es heute weithin üblich, (Feld-)Geräte wie SPS, Sensoren oder Aktoren bzw. ein von dieses umfasstes Funktionsmodul über eine Bedienschnittstelle, welche an einem Bediengerät bereitgestellt ist, das mit dem jeweiligen Gerät bspw. über ein Netzwerk verbunden ist, zu parametrieren, zu konfigurieren, zu analysieren oder auch in Betrieb zu nehmen.

Dabei sind bisher im Wesentlichen zwei Ansätze bekannt: zum einen Softwareapplikationen, die auf dem Bediengerät, bei dem es sich beispielsweise um einen PC oder ein Notebook handeln kann, installiert werden müssen, zum anderen webbasierte Applikationen, für die ein herkömmlicher Webbrowser auf dem Bediengerät genügt, da die Applikation selbst auf einem Webserver, der in dem jeweiligen (Feld-)Gerät, im Folgenden auch einfach nur als Gerät bezeichnet, integriert ist, ausgeführt wird bzw. am Anfang einer Sitzung (session) vom Webserver auf das Bediengerät übertragen und dann dort ausgeführt wird.

Die ersterwähnten Softwareapplikationen, nachfolgend auch als Softwaretools bezeichnet, folgen heute in der Regel dem sogenannten FDT/DTM-Konzept (field device tool/device type manager). Dabei ist ein DTM als Treiberprogramm für ein bestimmtes Gerät zu verstehen und umfasst dessen Funktionen, Struktur und Parametrierung. Zudem bietet ein DTM eine GUI (graphical user interface) einschließlich eines Hilfesystems. Die erforderlichen gerätespezifischen Informationen kann der DTM z.B. aus einer standardisierten Gerätebeschreibung, etwa einer GSD-Datei (general station description), beziehen, die wie der DTM vom Hersteller des Geräts z.B. über das Internet bereitgestellt wird. FDT definiert die Schnittstelle zwischen dem gesrätespezifischen DTM und einer Rahmenapplikation, z.B. einem Engineering-Tool.

Die Anbindung der Sensoren und Aktoren an das Automatisierungssystem kann zum Beispiel mittels IO-Linkbasiereter Feldbusse erfolgen, wobei ein IO-Link-Master die Schnittstelle zur überlagerten SPS bildet.

Webbasierte Applikationen, oder kurz Webapplikationen, zur Projektierung, Erstellung, Handhabung, Benutzung, Bearbeitung und/oder Simulation von Geräten bzw. Gerätefunktionen in Automatisierungssystemen werden beispielsweise von der Anmelderin in den früheren deutschen Patentanmeldungen mit den Aktenzeichen 10 2008 014 153.4-55 und 10 2008 019 040.3-55 ausführlich beschrieben. In beiden Anmeldungen werden die Webapplikationen bevorzugt mittels Ajax-Technologie (Asynchronous JavaScript and XML) realisiert. Ein weiteres Beispiel von WebappliKationen ist aus der Druckschrift EP 0 825 506 A2 bekannt.

Die zunehmende Verwendung webbasierter Applikationen auch im Bereich der Fertigungsautomatisierung und der entsprechenden Automatisierungssysteme ist nicht zuletzt auch eine Folge des vermehrten Einsatzes Ethernet-basierter und TCP/IP-fähiger Feldbussysteme (industrial ethernet) wie z.B. Profinet.

Gegenüber den herkömmlichen Softwareapplikationen haben Webapplikationen vor allem den Vorteil, dass im Wesentlichen jedes Bediengerät genutzt werden kann, das über einen Webbrowser und eine Netzwerkschnittstelle verfügt, während Softwareapplikationen speziell auf die Hardware und dass Betriebssystem des jeweiligen Bediengeräts abgestimmt sein müssen und auf diesem zu installieren sind.

Nachteilig ist jedoch beim Einsatz von Webapplikationen, dass sie speziell auf das jeweilige Gerät abgestimmt sein müssen und auf diesem zu installieren sind. Zudem ist auf jedem der Geräte neben der Webapplikation auch eine Webserver-Applikation zum Ausführen der Webapplikation und Bereitstellen deren Funktionen für den Zugriff durch ein Bediengerät zu installieren, wobei jedes Gerät bzw. dessen Webserver für einen Zugriff unter einer individuellen Adresse anzusprechen ist. Hieraus ergeben sich eine Reihe weiterer Nachteile. Diese sind zum einen in dem hohen Aufwand zu sehen, der sich aus der erforderlichen Administration und Wartung jedes einzelnen Geräts und dessen Webserver-Applikation ergibt, zum anderen in den hohen Gerätekosten, die sich daraus ergeben, dass jedes Gerät über ausreichend Ressourcen verfügen muss, um neben dessen eigentlichen Gerätefunktionen auch die Webserver-Applikation sowie die Webapplikation ausführen zu können. Darüber hinaus ist es bisher zum Beispiel für das Konfigurieren eines Geräts bzw. dessen Funktionsmoduls erforderlich, dass das Bediengerät mit dem entsprechenden Gerät über eine Kommunikationsverbindung verbunden ist, um die Konfigurationsdaten übertragen und auf dem Gerät abspeichern zu können.

Eine Aufgabe der Erfindung besteht somit darin, insbesondere zur Inbetriebnahme von Geräten, unter Vermeidung zumindest einiger der oben erwähnten Nachteile eine Möglichkeit für einen einfachen Zugriff auf ein Funktionsmodul eines Geräts in einem Automatisierungssystem von einem Bediengerät aus bereitzustellen.

Diese Aufgabe löst die Erfindung durch ein Verfahren sowie eine Vorrichtung gemäß der unabhängigen Ansprüche, wobei bevorzugte und/oder vorteilhafte Ausführungsformen in den Unteransprüchen beschrieben werden.

Demnach ist gemäß Anspruch 1 ein Verfahren zum Zugreifen auf ein Funktionsmodul eines Automatisierungssystems vorgesehen, wobei das Automatisierungssystem eine als übergelagertes Gerät ausgebildete Vorrichtung umfasst und wenigstens ein diesem untergelagertes Gerät umfasst. Ferner ist das Funktionsmodul als ein Teil des wenigstens einen untergelagerten Geräts und zum Ausführen wenigstens einer Gerätefunktion ausgebildet. Dieses Verfahren gemäß Anspruch 1 umfasst die folgenden Schritte:
Bereitstellen eines Bediengeräts (300), welches Ein- und Ausgabeeinrichtungen zur Bedienung durch einen Benutzer umfasst;
Verbinden des Bediengeräts mit dem übergelagerten Gerät über eine Kommunikationsverbindung (460);
Übertragen von Daten zwischen dem Bediengerät und dem übergelagerten Gerät, sowie dem bestimmten untergelagerten Gerät nach dessen Anschalten an das Automatisierungssystem, wenn der Zugriff auf das untergelagerte Gerät ermöglicht ist, und weiterhin:
   a) Bereitstellen einer Zugriffsapplikation (Z) mit wenigstens einer Applikationsfunktion auf dem übergelagerten Gerät (200), wobei die Applikationsfunktion zum Zugreifen auf ein beliebiges untergelagertes Gerät und dessen Funktionsmodul anpassbar ist und wobei die Zugriffsapplikation wenigstens ein erstes Applikationsmodul (Z1, Z2) umfasst;
   b) Ausführen des wenigstens einen ersten Applikationsmoduls auf dem übergelagerten Gerät, so dass
   c) Bedienschnittstelle der Zugriffsapplikation an dem Bediengerät automatisch bereitgestellt wird, und dass, nach
   d) Auswählen einer bestimmten Applikationsfunktion mittels der Bedienschnittstelle;
   e) Auswählen oder Eingeben einer ein bestimmtes untergelagertes Gerät identifizierenden Information mittels der Bedienschnittstelle;
   f) Bereitstellen von zu der ausgewählten oder eingegebenen Identifizierungsinformation passenden, das bestimmte untergelagerte Gerät detailliert beschreibenden Daten (D);
   g) die ausgewählt Applikationsfunktion und die Bedienschnittstelle automatisch angepasst werden, so dass ein Zugriff auf das bestimmte untergelagerte Gerät und dessen Funktionsmodul unter Ansprechen auf die bereitgestellten, das bestimmte untergelagerte Gerät detailliert beschreibenden Daten ermöglicht wird.

Bereits das Verfahren gemäß Anspruch 1 führt insbesondere zu dem Vorteil, dass durch das Bereitstellen einer Zugriffsapplikation auf einem übergelagerten Gerät des Automatisierungssystems weder auf dem Bediengerät noch auf dem untergelagerten Gerät mit dem Funktionsmodul besondere Ressourcen vorzusehen sind.

Weitere Vorteile ergeben sich, sobald dem übergelagerten Gerät mehrere Geräte mit je einem Funktionsmodul untergelagert sind, wie es bei dem Verfahren bevorzugt vorgesehen ist. Auch dann bedarf es nur der einen Zugriffsapplikation auf dem übergelagerten Gerät, da deren Applikationsfunktion an ein beliebiges untergelagertes Gerät und dessen Funktionsmodul anpassbar ist. Der Administrations- und Wartungsaufwand beschränkt sich somit weiterhin nur auf das übergelagerte Gerät und bleibt in Folge dessen gering.

Des Weiteren ist bei dem Verfahren vorteilhafter Weise vorgesehen, dass zwischen den Verfahrensschritten b) und e) ein automatisches Ermitteln von an das Automatisierungssystem angeschalteten, dem übergelagerten Gerät untergelagerten Geräten sowie ein automatisches Auslesen einer das jeweilige untergelagerte Gerät identifizierenden Information erfolgt, so dass ferner im Verfahrensschritt e) mittels der Bedienschnittstelle das Auswählen einer ein bestimmtes untergelagertes Gerät identifizierenden Information aus einer Anzahl zuvor ermittelter und ausgelesener, jeweils ein untergelagertes Gerät identifizierenden Informationen erfolgen kann.

Daneben bietet das Verfahren im Verfahrensschritt e) bevorzugt die Möglichkeit zur Eingabe einer ein bestimmtes untergelagertes Gerät identifizierenden Information, wobei es sich auch um die identifizierende Information für ein zunächst nicht an das Automatisierungssystem angeschaltetes untergelagertes Gerät handeln kann.

Zweckmäßiger Weise sind bei dem Verfahren die ein untergelagertes Gerät detailliert beschreibenden Daten in einer Speichereinheit des untergelagerten Geräts, des übergelagerten Gerät, des Bediengeräts oder in einer Speichereinheit eines Servers im Internet gespeichert, wobei das Bediengerät über eine weitere Kommunikationsverbindung zumindest vorübergehend mit diesem Internet-Server verbunden ist.

Alternativ oder ergänzend besteht bei dem Verfahren die Möglichkeit, dass die ein untergelagertes Gerät detailliert beschreibenden Daten in einer transportablen Speichereinheit, etwa einer Diskette, CD, DVD oder einem Flash-Speicher wie einem USB-Stick oder einer Speicherkarte, gespeichert sind, wobei das Bediengerät eine geeignete Leseeinrichtung zum Auslesen der Daten aus der transportablen Speichereinheit umfasst.

Sofern die das bestimmte untergelagerte Gerät detailliert beschreibenden Daten in einer durch das übergelagerte Gerät auslesbaren Speichereinheit gespeichert sind, wobei die Speichereinheit zu dem übergelagerten Gerät selbst oder zu einem mit diesem verbundenen Gerät gehören kann, ist bei dem Verfahren besonders bevorzugt vorgesehen, dass im Schritt f) das Bereitstellen der erforderlichen Daten automatisch durchgeführt wird.

vorzugsweise liegen bei dem Verfahren die ein untergelagertes Gerät detailliert beschreibenden Daten als GSD-Datei (general stationd description) oder IODD-Datei (IO device description) und/oder im JSON-Format (JavaScript Object Notation) vor.

Das Übertragen der Daten wird bevorzugt in Antwort auf Benutzereingaben durchgeführt, die mittels der Bedienschnittstelle erfolgten.

Ferner bevorzugt umfassen die zu dem bestimmten untergelagerten Gerät zu übertragenden Daten die das Gerät detailliert beschreibenden Daten, wobei zumindest die letzteren in einer von dem übergelagerten Gerät umfassten Speicherheit gespeichert werden, und zwar insbesondere dann, wenn diese Daten zuvor in einer transportablen Speichereinheit gespeichert waren, so dass für einen zukünftigen Zugriff auf das gleiche oder ein gleichartiges Gerät die das Gerät detailliert beschreibenden Daten an zentraler Stelle bereits bereitstehen.

Besonders bevorzugt ist vorgesehen, dass die zu dem bestimmten untergelagerten Gerät zu übertragenden Daten, welche die das Gerät detailliert beschreibenden Daten umfassen, in einer von dem übergelagerten Gerät umfassten Speicherheit zwischengespeichert werden, und dass die zwischengespeicherten Daten zu dem bestimmten untergelagerten Gerät übertragen werden, nachdem ein automatisches Erkennen des bestimmten untergelagerten Geräts als angeschaltetes Gerät anhand der das Gerät identifizierenden Information erfolgte. Dadurch ist einerseits auch ein Zugreifen, etwa zur Inbetriebnahme und Konfiguration, auf Geräte und deren und Funktionsmodule möglich, die zunächst noch nicht an das Automatisierungssystem angeschaltet sind. Andererseits werden die Daten zu dem bestimmten untergelagerten Gerät nach dessen Anschlaten übertragen, ohne dass dann das Bediengerät noch mit dem übergelagerten Gerät verbunden sein muss.

Die zu dem bestimmten untergelagerten Gerät übertragenen Daten, welche die das Gerät detailliert beschreibenden Daten umfassen, werden zweckmäßiger Weise in einer von dem untergelagerten Gerät umfassten Speicherheit gespeichert.

Bevorzugt umfasst die auf dem übergelagerten Gerät bereitsgestellte Zugriffsapplikation wenigstens ein zweites Applikationsmodul, welches über die Kommunikationsverbindung zu dem Bediengerät übertragen und dann auf diesem ausgeführt wird, so dass zumindest eine teilweise Entlastung des übergelagerten Geräts erreicht wird, ohne dass auf dem Bediengerät eine Applikation zu installieren wäre.

Gemäß einer weiteren bevorzugten Variante des Verfahrens wird auf dem übergelagerten Gerät eine Server-Applikation bereitgestellt und ausgeführt, wobei es sich insbesondere um eine Webserver-Applikation handelt und wobei das im Schritt b) ausgeführte wenigstens eine erste Applikationsmodul mit dieser zusammenwirkt. Dabei ist an dieser Stelle nochmals auf den Vorteil gegenüber bisher bekannten Lösungen hinzuweisen, dass sich der Administrations- und Wartungsaufwand auch hinsichtlich der Server-Applikation auf nur ein, nämlich das übergelagerte, Gerät beschränkt. Zudem ist unter nur einer Server-Adresse auf äußerst praktische Weise der Zugriff auf alle dem übergelagertern Gerät untergelagerten Geräte und deren Funktionsmodule möglich.

Ferner wird auf dem Bediengerät vorzugsweise eine Webbrowser-Applikation bereitgestellt und ausgeführt, so dass im Verfahrensschritt c) die Bedienschnittstelle der Zugriffsapplikation in Zusammenwirken mit der Webbrowser-Applikation bereitgestellt wird.

In einer besonders bevorzugten Ausführungsform des Verfahrens ist vorgesehen, dass das wenigstens eine zweite Applikationsmodul der Zugriffsapplikation auf Java-Applets oder AJAX-Technologien (Asynchronous Javascript and XML) beruht, wobei dies eine Webserver-Applikation auf Seiten des übergelagerten Geräts und eine Webbrowser-Applikation auf Seiten des Bediengeräts, wie zuvor beschrieben, voraussetzt.

Zweckmäßiger Weise umfasst die an dem Bediengerät bereitgestellte Bedienschnittstelle eine GUI (graphical user interafce).

Bei der wenigstens einen Applikationsfunktion der Zugriffsfunktion handelt es sich bevorzugt um eine Inbetriebnahmefunktion, eine Bearbeitungsfunktion, eine Überwachungsfunktion und/oder eine Analysefunktion.

Das Bediengerät ist besonders bevorzugt ein PC, ein Laptop-, Tablet- oder Handheld-Computer.

Ferner ist zur Lösung der oben genannten Aufgabe und zur Durchführung des erfindungsgemäßen Verfahrens gemäß Anspruch 11 eine Vorrichtung eines Automatisierungssystems vorgesehen, bei dem es sich um ein übergelagertes Gerät handelt, dem wenigstens ein Gerät untergelagert ist. Das untergelagerte Gerät umfasst dabei ein Funktionsmodul zum Ausführen wenigstens einer Gerätefunktion. Das übergelagerte Gerät umfasst eine erste und wenigstens eine zweite Kommunikationsschnittstelle. Die erste Kommunikationsschnittstelle ist ausgebildet zum Verbinden des übergelagerten Geräts mit einem Bediengerät, wobei das übergelagerte Gerät zum Kommunizieren mit dem Bediengerät ausgebildet ist. Die wenigstens eine zweite Kommunikationsschnittstelle ist ausgebildet zum Verbinden des übergelagerten Geräts mit dem wenigstens einen untergelagerten Gerät, wobei das übergelagerte Geräte auch zum Kommunizieren mit dem wenigstens einen untergelagerten Gerät ausgebildet ist.

Ferner umfasst das übergelagerte Gerät gemäß Anspruch 11 eine Speichereinheit und eine Prozessoreinheit wobei in der Speichereinheit eine Zugriffsapplikation, die wenigstens ein erstes Applikationsmodul umfasst, gespeichert ist und wobei die Prozessoreineit zum Ausführen des wenigstens einen ersten Applikatinsmoduls der Zugriffsapplikation ausgebildet ist. Diese Zugriffsapplikation ist ausgebildet zum Bereitstellen wenigstens einer Applikationsfunktion, welche zum Zugreifen auf ein beliebiges untergelagertes Gerät und dessen Funktionsmodul anpassbar ist. Zudem ist diese Zugriffsapplikation ausgebildet zum Bereitstellen einer Bedienschnittstelle an dem Bediengerät sowie zum Anpassen der Bedienschnittstelle und der wenigstens einen Applikationsfunktion für einen Zugriff auf ein bestimmtes untergelagertes Gerät und dessen Funktionsmodul unter Ansprechen auf eine das bestimmte untergelagerte Gerät identifizierende Information und auf das bestimmte untergelagerte Gerät detailliert beschreibende Daten.

Das übergelagerte Gerät ist in einer bevorzugten Implementierung als speicherprogrammierbare Steuerung (SPS) oder als Buskoppler ausgebildet.

Gemäß einer besonders bevorzugten Implementierung ist das übergelagerte Gerät als ein IO-Link-Master und die wenigstens eine zweite Kommunikationsschnittstelle gemäß IO-Link-Standard ausgebildet.

Bevorzugt ist ferner vorgesehen, dass dem übergelagerten Gerät mehrere Geräte mit je einem Funktionsmodul untergelagert sind, wobei diese gemeinsam, z.B. über einen Bus, mit der wenigstens einen zweiten Kommunikationsschnittstelle des übergelagerten Geräts verbunden sind und/oder eine Anzahl von untergelagerten Geräten mit jeweils einer weiteren zweiten Kommunikationsschnittstelle des übergelagerten Geräts einzeln verbunden ist.

Anwendungsspezifisch ist die erste Kommunikationsschnittstelle des übergelagerten Geräts für eine kabelgebundene oder kabellose Verbindung mit dem Bediengerät ausgebildet, wobei ferner die erste Kommunikationsschnittstelle zweckmäßiger Weise gemäß Ethernet-Standard und/oder für eine TCP/IP-basierte Datenübertragung ausgebildet ist.

In einer bevorzugten Ausführungsform des übergelagerten Geräts ist die Zugriffsapplikation ausgebildet zum Ermitteln von an das Automatisierungssystem angeschalteten dem übergelagerten Gerät untergelagerten Geräten sowie zum Auslesen einer das jeweilige untergelagerte Gerät identifizierenden Information.

In einer weiteren bevorzugten Ausführungsform des übergelagerten Geräts ist die Zugriffsapplikation ferner ausgebildet, die ein untergelagertes Gerät detailliert beschreibenden Daten aus einer Speichereinheit, in der sie gespeichert sind, auszulesen, wobei die Speichereinheit zu dem übergelagerten Gerät selbst oder zu einem mit diesem verbundenen Gerät gehören kann. Insbesondere kann es sich dabei auch um eine Speichereinheit des untergelagerten Geräts, des Bediengeräts oder eine Speichereinheit eines Servers im Internet, beispielsweise den des geräteherstellers, handeln, mit dem das Bediengerät über eine Kommunikationsverbindung zumindest vorübergehend verbunden ist. Die ein untergelagertes Gerät detailliert beschreibenden Daten liegen dabei bevorzugt als GSD-Datei oder IODD-Datei und/oder im JSON-Format vor.

Zweckmäßiger Weise ist bei einer weiteren Ausfürhungsform des übergelagerten Geräts die Zugriffsapplikation ausgebildet, eine Datenübertragung zwischen dem Bediengerät und dem untergelagerten Gerät in Antwort auf Benutzereingaben, die mittels der Bedienschnittstelle erfolgten, zu bewirken.

In einer ferner bevorzugten Implementierung des übergelagerten Geräts ist die Zugriffsapplikation ausgebildet, ein Speichern von Daten in der Speichereinheit des übergelagerten Geräts zu bewirken und zwar von den zu dem bestimmten untergelagerten Gerät zu übertragenden Daten zumindest der darin enthaltenen das bestimmte untergelagerte Gerät detailliert beschreibenden Daten.

In einer besonders bevorzugten Implementierung des übergelagerten Geräts ist die Zugriffsapplikation ausgebildet zum Bewirken eines Zwischenspeicherns von Daten in der Speichereinheit des übergelagerten Geräts und zwar der zu einem bestimmten untergelagerten Gerät zu übertragenden Daten, welche die das Gerät detailliert beschreibenden Daten enthalten. Sie ist ferner ausgebildet zum Erkennen des bestimmten untergelagerten Geräts als an das Automatisierungssystem angeschaltetes Gerät anhand der das Gerät identifizierenden Information, und zum darauffolgenden Bewirken einer Übertragung der zwischengespeicherten Daten zu dem bestimmten untergelagerten Gerät.

In einer weiteren Implementierung des übergelagerten Geräts ist die Zugriffsapplikation zweckmäßiger Weise ausgebildet, ein Speichern der zu einem bestimmten untegelagerten Gerät übertragenen Daten, welche die das Gerät detailliert beschreibenden Daten umfassen, in einer Speichereinheit des bestimmten untergelagerten Geräts zu bewirken.

In einer anderen bevorzugten Ausführungsform des übergelagerten Geräts umfasst die Zugriffsapplikation wenigstens ein zweites Applikationsmodul, wobei das übergelagerte Gerät ausgebildet ist, das wenigstens eine zweite Applikationsmodul zu dem Bediengerät für ein Ausführen des Applikationsmoduls auf dem Bediengerät zu übertragen, wobei die Module uzr Kommunikation miteinander ausgebildet sind.

Vorzugsweise ist vorgesehen, dass in der Speichereinheit des übergelagerten Geräts eine Server-Applikation, insbesondere Webserver-Applikation, gespeichert und dass die Prozessoreinheit zum Ausführen der Server-Applikation ausgebildet ist, wobei ferner die Zugriffsapplikation zum Zusammenwirken mit der Server-Applikation angepasst ist.

Ferner ist bevorzugt vorgesehen, dass die Zugriffsapplikation des übergelagerten Geräts zum Bereitstellen der Bedienschnittstelle in Zusammenwirken mit einer auf dem Bediengerät ausgeführten Webbrowser-Applikation ausgebildet ist.

Gemäß einer besonders bevorzugten Ausführungsform des übergelagerten Geräts ist ferner vorgesehen, dass das wenigstens eine zweite Applikationsmodul der Zugriffsapplikation auf Java-Applets oder AJAX-Technologien beruht, was eine Webserver-Applikation auf Seiten des übergelagerten Geräts und eine Webbrowser-Applikation auf Seiten des Bediengeräts, wie zuvor beschrieben, voraussetzt.

Gemäß einer weiteren bevorzugten Ausführungsform des übegelagerten Geräts ist die Zugriffsapplikation ausgebildet, an dem Bediengerät eine eine GUI umfassende Bedienschnittstelle bereitzustellen.

Zweckmäßiger Weise ist bei einer weiteren Ausfürhungsform des übergelagerten Geräts die Zugriffsapplikation ausgebildet zum Bereitstellen einer Inbetriebnahmefunktion, einer Bearbeitungsfunktion, einer Überwachungsfunktion und/oder einer Analysefunktion als die wenigstens eine Applikationsfunktion.

In einer anderen vorteilhaften Implementierung des übergelagerten Geräts ist vorgesehen, dass in dessen Speichereinheit eine weitere Applikation gespeichert ist, welche von der Prozessoreinheit des übergelagerten Geräts ausführbar ist und welches als Applikationsfunktion eine Steuerungsfunktion zur Steuerung wenigstens eines Teils des Automatisierungssystems umfasst.

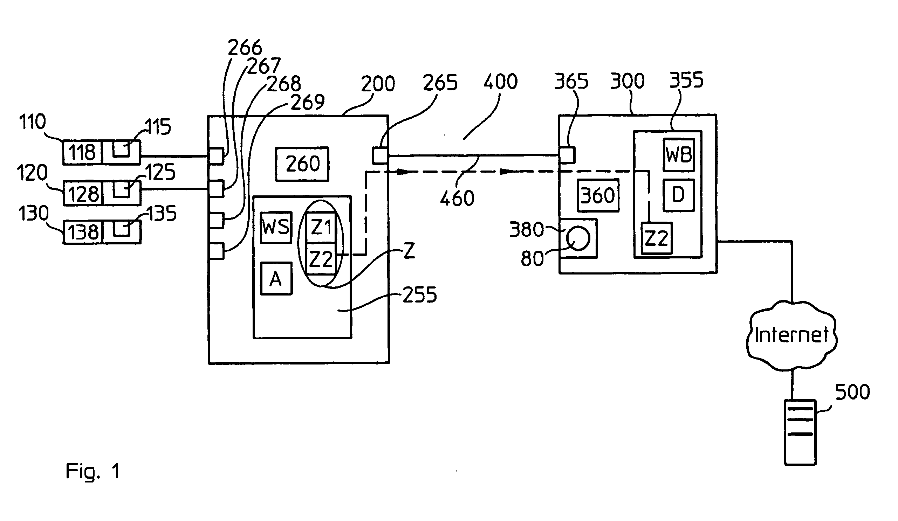

Diese und weitere Merkmale sowie weitere damit einher gehende Vorteile der Erfindung ergeben sich aus der nachfolgenden näheren Beschreibung eines bevorzugten Ausführungsbeispiels unter Bezugnahme auf die Figur 1.

Figur 1 zeigt schematisch einzelne Komponenten eines Automatisierungssystems, das nach der Erfindung angepasst ist.

In der Figur 1 ist mit 200 eine als überlagertes Gerät eines nicht näher dargestellten Automatisierungssystems ausgebildete Vorrichtung gekennzeichnet.

Drei dieser Vorrichtung 200 untergelagerte Geräte sind mit 110, 120 und 130 gekennzeichnet, die jeweils ein Funktionsmodul 118, 128 bzw. 138 und einen Speicher 115, 125 bzw. 135 besitzen.

Das überlagerte Gerät 200 besitzt eine Anzahl von Kommunikationsschnittstellen 266 bis 269 zum Verbinden mit untergelagerten Geräten. Die untergelagerten Geräte 110 und 120 sind über nicht näher dargestellte Kommunikationsschnittstellen mit den Kommunikationsschnittstellen 266 bzw. 267 des überlagerten Geräts 200 verbunden. Das untergelagerte Gerät 130 ist gemäß Fig. 1 noch im Offline-Zustand, d.h. ist noch nicht an das überlagerte Gerät 200 verbunden.

Das überlagerte Gerät 200 besitzt ferner eine weitere Kommunikationsschnittstelle 265, die über eine Kommunikationsverbindung 460 mit einer Kommunikationsschnittstelle 365 eines Bediengeräts 300 verbunden ist.

Die Kommunikationsverbindung 460 kann, wie angedeutet Teil eines Netzwerkes 400 des Automatisierungssystems oder auch eine separate Kommunikationsverbindung zwischen dem überlagerten Gerät 200 und dem Bediengerät 300 sein.

Das überlagerte Gerät 200 besitzt ferner einen Speicher 255 und einen Prozessor 260, wobei in dem Speicher 255 beispielsweise eine durch den Prozessor 260 ausführbare Applikation A abgelegt ist. Daneben ist in dem Speicher 255 auch eine Zugriffsapplikation Z und eine Webserver-Applikation WS gemäß vorliegender Erfindung abgelegt, welche ebenfalls durch den Prozessor 260 ausführbar sind. Die dargestellte Zugriffsapplikation Z umfasst zwei Applikationsmodule Z1 und Z2.

Das Bediengerät 300 besitzt ferner einen Speicher 355 und einen Prozessor 360, wobei in dem Speicher 355 eine Webbrowser-Applikation WB abgelegt ist, welche durch den Prozessor 360 ausführbar ist. Der Speicher 355 enthält beispielhaft ferner eine Gerätebeschreibungsdatei D.

Die Zugriffsapplikation Z ist zum Zusammenwirken sowohl mit der Webserver-Applikation WS als auch mit der Webbrowser-Applikation WB auf Seiten des Bediengeräts 300 ausgebildet, wie nachfolgend näher beschrieben.

Das Bediengerät 300 kann ein CD/DVD-Laufwerk 380 zum Auslesen einer CD-ROM 80 besitzen und über das Internet mit dem Speicher eines Servers 500 im Internet verbunden sein.

Die Figur 1 zeigt somit schematisch in nachfolgenden bevorzugten Ausführungsbeispielen zusammenwirkende Komponenten eines gemäß der Erfindung ausgebildeten Automatisierungssystems, insbesondere des übergelagerten Geräts sowie des Bediengeräts.

Auch wenn die Erfindung im Folgenden insbesondere anhand einer Zugriffsapplikation mit einer Inbetriebnahmefunktion erläutert wird, ist dies nicht als Einschränkung auf eine solche Applikationsfunktion zu verstehen. Erfindungsgemäß können alternativ oder ergänzend zum Beispiel auch Funktionen zum Parametrieren, Konfigurieren, Überwachen, Steuern oder Analysieren eines untergelagerten Geräts 110, 120 oder 130 und dessen jeweiligen Funktionsmoduls 118, 128 bzw. 138 bereitgestellt werden.

In dem in Fig. 1 dargestellten Beispiel handelt es sich bei dem übergelagerten Gerät 200 z.B. um einen IO-Link-Master, nachfolgend auch nur als Master bezeichnet, mittels dem mehrere IO-Link-Geräte 110, 120, 130 an ein Netzwerk 400 des Automatisierungssystem anschaltbar bzw. in dieses einbindbar sind. Wie aus Fig. 1 ersichtlich, sind zwei IO-Link-Geräte 110, 120, nachfolgend teilweise auch nur als Geräte bezeichnet, hierzu zunächst mit dem Master 200 verbunden und diesem somit untergelagert. Von diesen Geräten umfasst das eine als Funktionsmodul ein Sensormodul 118, während das andere als Funktionsmodul ein Aktormodul 128 umfasst, wobei jedes der Geräte mit einer IO-Linkbasierten Kommunikationsschnittstelle 266, 267 des Masters verbunden ist, so dass Daten zwischen dem jeweiligen untergelagerten Gerät und dem Master übertragbar sind. Ein weiteres Gerät 130 mit einem Sensormodul 138 ist noch nicht mit dem Master 200 verbunden. Über eine weitere Kommunikationsschnittstelle 265, die gemäß Profinet-*Standard ausgeführt ist, ist der Master ferner mit dem weiteren Netzwerk 400 des Automatisierungssystem verbunden.

In einem anderen als dem dargestellten Fall kann das übergelagerte Gerät 200 z.B. auch eine speicherprogrammierbare Steuerung (SPS) sein, wobei hierbei auch an nur eine Kommunikationsschnittstelle der SPS mehrere Feldgeräte als untergelagerte Geräte über einen gemeinsamen Bus angeschlossen sein können.

Der IO-Link-Master 200 verfügt somit zudem über den Speicher 255 und den Prozessor 260, wobei in dem Speicher 255 beispielsweise eine durch den Prozessor 260 ausführbare Applikation A abgelegt ist, die eine Funktion zur Steuerung bzw. Koordinierung der Kommunikation mit den untergelagerten Geräten umfasst. Daneben ist in dem Speicher auch die Zugriffsapplikation Z gemäß vorliegender Erfindung abgelegt, welche ebenfalls durch den Prozessor 260 ausführbar ist und welche in dem hier dargestellten Beispiel als Applikationsfunktion bzw. Zugriffsfunktion eine Inbetriebnahmefunktion umfasst.

Diese Inbetriebnahmefunktion ist erfindungsgemäß zunächst geräteneutral ausgebildet und somit grundsätzlich für die Inbetriebnahme beliebiger untergelagerter Geräte und deren Funktionsmodule anwendbar. Eine spezifische Anpassung der Inbetriebnahmefunktion an ein bestimmtes Gerät und dessen Funktionsmodul ist mit Hilfe sogenannter Gerätebeschreibungsdateien möglich, die eine Menge von ein Gerät detailliert beschreibenden Daten enthalten und in der Regel vom jeweiligen Gerätehersteller zur Verfügung gestellt werden. Solche Gerätebeschreibungsdateien werden auch als GSD-Datei (general station description) und im Falle von IO-Link-Geräten als IODD-Datei (IO device description) bezeichnet, wobei die Daten innerhalb solcher Dateien z.B. im JSON-Format (JavaScript objekt notation) strukturiert sind.

Das Bediengerät 300, bei dem es sich z.B. um einen Laptop-Computer handelt, ist über dessen gemäß Ethernet-Standard ausgeführte Kommunikationsschnittstelle 365 an einer im Wesentlichen frei wählbaren Zugangsstelle mit dem ebenfalls Ethernet- sowie TCP/IP-basierten Profinet-Netzwerk 400 des Automatisierungssystems und somit auch mit dem IO-Link-Master 200 verbunden. Als Ausgabeeinrichtung verfügt der Laptop-Computer 300 über eine in der Figur nicht dargestellte LCD-Anzeige und als Eingabeeinrichtung ist an dem Laptop 300 eine ebenfalls nicht abgebildete Tastatur vorhanden. Ferner besitzt in diesem Fall der Laptop-Computer 300 den Speicher 355, in dem neben anderen Applikationen auch eine an sich bekannte Webbrowser-Applikation WB abgelegt ist, welche durch den Prozessor 360 ausführbar ist. Anstelle des Laptop-Computers hätte es sich bei dem Bediengerät 300 alternativ beispielsweise um einen Tablet-Computer oder einen herkömmlichen PC handeln können. Des weiteren könnte das Bediengerät 300 anstelle einer kabelgebundenen Verbindung als Kommunikationsverbindung 460 auch über eine kabellose Verbindung wie WLAN mit dem übergelagerten Gerät 200 verbunden sein, sofern die Kommunikationsschnittstelle 365 des Bediengeräts sowie die Zugangsstelle des Netzwerks 400 dafür geeignet ausgebildet sind. Ferner könnte das Bediengerät 300 auch direkt statt über ein Netzwerk mit dem übergelagerten Gerät 200 verbunden sein.

In dem Speicher 255 des IO-Link-Masters 200 ist, wie bereits erwähnt, ferner auch eine Webserver-Applikation WS abgelegt, welche ebenfalls durch den Prozessor 260 des Masters ausführbar ist. Die Zugriffsapplikation Z ist zum Zusammenwirken sowohl mit der Webserver-Applikation WS als auch mit der Webbrowser-Applikation WB auf Seiten des Bediengeräts 300 ausgebildet, und zwar bevorzugt derart, dass, gemäß dem Request/Response-Prinzip zwischen Webbrowser und Webserver, in Antwort auf eine Anfrage eine Bedienschnittstelle der Zugriffsapplikation an dem Bediengerät bereitgestellt, d.h. eine graphische Benutzerschnittstelle (graphical user interface, GUI) bzw. Bedienoberfläche auf der LCD-Anzeige des Laptop-Computers angezeigt wird. Hat zum Beispiel ein Benutzer mit der Absicht eines der IO-Link-Geräte 110, 120, 130 in Betrieb zu nehmen, an dem Laptop-Computer 300 mittels der Tastatur die Adresse des Webservers des IO-Link-Masters in die Adresszeile des Webbrowsers WB eingegeben, überträgt der Webserver WS in Antwort auf diese Anfrage und in Zusammenwirken mit der Zugriffsapplikation Z eine durch diese bereitgestellte erste Webseite, auch Startseite genannt, an den Webbrowser WB, welcher sie dann dem Benutzer präsentiert.

Die Zugriffsapplikation ist in der Praxis zweckmäßig modular aufgebaut, wobei es in dem gemäß Fig. 1 dargestellten Beispiel zwei Applikationsmodule Z1, Z2 gibt, von denen nur das erste Z1 auf dem Master 200, d.h. durch den Prozessor 260 des Masters, ausgeführt wird. Dieses erste Modul Z1 der Zugriffsapplikation Z sorgt unter anderem für das zuvor beschriebene Bereitstellen einer Startseite. Diese im Webbrowser WB angezeigte Startseite bietet dem Benutzer eine Auswahlübersicht über die verfügbaren Funktionen der Zugriffsapplikation. Der Benutzer hat dann die Möglichkeit, aus dieser Übersicht die gewünschte Zugriffsfunktion auszuwählen, wobei in diesem Fall nur eine Zugriffsfunktion, nämlich die Inbetriebnahmefunktion, aufgeführt ist.

Nach Auswahl der Inbetriebnahmefunktion und nach Übertragung dieser Auswahl an den Webserver WS des IO-Link-Masters 200, überträgt dieser als Antwort hierauf und in Zusammenwirken mit der Zugriffsapplikation bzw. deren erstem Applikationsmodul Z1 nicht nur eine zweite Webseite, sondern vor allem auch Programmcode an den Webbrowser WB des Bediengeräts 300. Bei diesem Programmcode handelt es sich um das zweite Modul der Zugriffsapplikation Z2, welches die Inbetriebnahmefunktion umfasst. Die Übertragung des zweiten Applikationsmoduls Z2 ist in Fig. 1 durch die gestrichelte Linie angedeutet. Dieses zweite Modul Z2 ist bevorzugt als Java-Applet ausgeprägt, das in die zweite Webseite eingebettet ist und auf dem Bediengerät 300, d.h. durch dessen Prozessor, ausgeführt wird.

In einem anderen als den hier dargestellten Fall, kann das zweite Modul Z2 z.B. mittels AJAX-Technologien umgesetzt sein, welche ebenfalls eine Möglichkeit darstellt, Programmcode von einem Webserver zu einem Webbrowser zu übertragen, damit er dort, auf Seiten des Bediengeräts, ausgeführt wird. Ferner ist es möglich, dass die Zugriffsapplikation mehrere Zugriffsfunktionen bereitstellt und mehr als zwei Applikationsmodule umfasst, welche je nach Auswahl zu dem Bediengerät übertragen und dort ausgeführt werden. Dieser modulare Aufbau der Zugriffsapplikation und das Ausführen von Applikationsmodulen auf Seiten des Bediengeräts tragen wesentlich zur Entlastung des Prozessors des überlagerten Geräts 200 bei.

Es sei jedoch darauf hingewiesen, dass die Modularität der Zugriffsapplikation sowie das Ausführen einzelner Module auf Seiten des Bediengeräts keine zwingende Merkmale der Erfindung ist. Stattdessen können auch alle Applikationsmodule jeweils auf dem übergelagerten Gerät ausgeführt werden oder die Zugriffsapplikation kann monolithisch aufgebaut sein.

Wie bereits erwähnt, ist die Inbetriebnahmefunktion erfindungsgemäß zunächst geräteneutral ausgebildet und erfordert für eine Anpassung an ein bestimmtes Gerät und dessen Funktionsmodul weitere Daten, die das Gerät detailliert beschreiben. Eingebettet in die zweite Webseite bietet das Java-Applet, also das zweite Modul Z2, dem Benutzer eine Auswahlübersicht über die mit dem überlagerten Gerät 200 verbundenen und diesem untergelagerten Geräte 110, 120. Das vorherige Ermitteln dieser Geräte sowie das Auslesen jeweils einer das Gerät identifizierenden Information, wie z.B. einer Seriennummer oder einer Gerätebezeichnung aus einem ermittelten Gerät, erfolgt zuvor durch das erste Applikationsmodul Z1, wobei die ausgelesenen Informationen anschließend zu dem zweiten Modul Z2 übertragen werden. Beispielsweise enthält also die Auswahlübersicht Einträge für das Gerät 110 mit dem Sensormodul 118 und jenes Gerät 120 mit dem Aktormodul 128. Zudem gibt es auf der zweiten Webseite noch ein Eingabefeld, in das der Benutzer zum Beispiel die identifizierende Information für das Gerät 130, das bisher noch nicht mit dem Master 200 verbunden ist, eingeben kann.

Nach Auswahl des Geräts 110 mit dem Sensormodul 118 als das in Betrieb zu nehmende, wird eine zu dem Gerät passende Beschreibungsdatei für das gerätespezifische Anpassen der Inbetriebnahmefunktion benötigt. Das Bereitstellen dieser Datei kann auf unterschiedlichem Wege erfolgen, in Abhängigkeit davon, wo diese Datei gespeichert ist. Mögliche Speicherorte sind der Speicher 355 des Bediengeräts 300 oder der Speicher 255 des Masters 200 aber auch ein Speicher 115 im untergelagerten Gerät 110 selbst, sowie ferner ein Server 500 im Internet, beispielsweise der des Geräteherstellers, oder eine CD-ROM 80, die ebenfalls vom Hersteller des Geräts zur Verfügung gestellt worden sein kann.

Im vorliegenden Fall wird angenommen, dass die Gerätebeschreibungsdatei sich als Gerätebeschreibungsdatei D im Speicher 355 des Laptop-Computers befindet. Die Zugriffsapplikation, hier insbesondere das zweite Modul Z2, ist ausgebildet, anhand der ausgewählten Identifizierungsinformation des Geräts 118, die im Bediengerät befindlichen Speichereinheiten nach der passenden Gerätebeschreibungsdatei D zu durchsuchen, so dass die benötigte Datei automatisch gefunden wird. Ebenfalls automatisch wird dann durch das zweite Modul Z2 die im Webbrowser WB angezeigte Bedienoberfläche angepasst, ohne dass von dem Webserver WS eine weitere Webseite übertragen worden ist bzw. muss. Unter der Annahme, dass die Anpassung der Bedienoberfläche im Zusammenhang mit der Anpassung der Inbetriebnahmefunktion an das Gerät 110 mit dem Sensormodul 118 erfolgte, stehen dem Benutzer nun auf der sogenannten Inbetriebnahmeoberfläche eine Reihe von Bedienelementen bezüglich der Inbetriebnahme dieses Geräts, wie beispielsweise zum Eingeben oder Einstellen von Parametern, zur Verfügung.

Es liegt ebenfalls im Rahmen der Erfindung, dass das zweite Modul Z2 ausgebildet ist, eine im CD/DVD-Laufwerk 380 des Bediengeräts befindliche CD-ROM 80 sowie bei bestehender Verbindung des Bediengeräts mit dem Internet, den Speicher eines Servers 500 im Internet nach der benötigten Gerätebeschreibungsdatei zu durchsuchen und gegebenenfalls herunterzuladen. Natürlich kann der Benutzer die zu verwendende Datei auch manuell angeben. Ferner kann auch das erste Modul Z1 der Zugriffsapplikation Z eine automatische Suche nach der Gerätebeschreibungsdatei im Speicher des IO-Link-Masters 255 und/oder des IO-Link-Geräts 115 durchführen, und zwar unter Ansprechen auf eine Anfrage des zweiten Moduls Z2, wobei nach Auffinden der Datei diese an das zweite Modul übermittelt wird. Nachdem alle zur Inbetriebnahme des Geräts 110 erforderlichen Einstellungen durch den Benutzer vorgenommen wurden, erfolgt eine Übertragung aller Daten, der durch den Benutzer gesetzten sowie der das Gerät beschreibenden Daten, zunächst an das erste Modul Z1, welches dann für die Weiterübertragung der Daten zu dem bestimmten Gerät 110 und ein Ablegen der Daten in dessen Speicher 115 sorgt. Erfindungsgemäß ist ferner vorgesehen, dass durch das erste Modul Z1 die Gerätebeschreibungsdaten auch im Speicher 255 des überlagerten Geräts 200 abgelegt werden, damit sie für eine spätere Verwendung bereits an zentraler Stelle zur Verfügung steht.

Ein weiterer Aspekt der Erfindung ist es, dass die Zugriffsapplikation Z auch für sogenannte Offline-Zugriffe, also beispielsweise für die Inbetriebnahme von Geräten nutzbar, die noch nicht an das Automatisierungssystem angeschaltet, d.h. noch nicht mit dem übergelagerten Gerät verbunden sind. Der Benutzer hat dadurch die Möglichkeit, die Inbetriebnahme eines solchen Geräts weitestgehend vorzubereiten, indem er alle erforderlichen Einstellungen bereits vorgenommen kann.

Bezogen auf die vorhergehende Beschreibung soll z.B. auch das andere Gerät 130 mit dem Sensormodul 138, welches noch nicht mit dem Master 200 verbunden ist, in Betrieb genommen werden. Hierzu setzt der Benutzer die Inbetriebnahmefunktion wieder in den neutralen Ausgangszustand, so dass im Webbrowser WB wieder die Auswahlübersicht über die mit dem Master verbundenen Geräte angezeigt wird, sowie ferner das Eingabefeld, in das der Benutzer nun die identifizierende Information für das nicht angeschaltete Gerät 130 eingibt. Anschließend erfolgt wieder eine Anpassung der Bedienoberfläche und der Inbetriebnahmefunktion an das bestimmte Gerät 130 durch das zweite Modul Z2, nachdem die erforderliche Gerätebeschreibungsdatei automatisch gefunden oder durch den Benutzer angegeben wurde. Dem Benutzer steht daraufhin wieder eine Inbetriebnahmeoberfläche mit einer Reihe von Bedienelementen bezüglich der Inbetriebnahme des Geräts 130 mit Sensormodul 138 zur Verfügung. Nachdem alle zur Inbetriebnahme erforderlichen Einstellungen durch den Benutzer vorgenommen wurden, erfolgt wieder eine Übertragung aller Daten an das erste Modul Z1, wobei dieses nun zunächst ein Zwischenspeichern der Daten im Speicher 255 des Masters bewirkt.

Das erste Applikationsmodul Z1 ist, wie bereits erwähnt, in der Lage, mit dem Master 200 verbundene untergelagerte Geräte zu ermitteln sowie eine das Gerät identifizierende Information auszulesen. Das erste Applikationsmodul Z1 kann somit auch erkennen, wenn ein weiteres Gerät angeschaltet wird und kann dieses darüber hinaus identifizieren. Wird nun also das Gerät 130 mit dem Master verbunden, erkennt dies das erste Modul Z1 und prüft anhand der ausgelesenen Identifizierungsinformation ob die im Speicher 255 zwischengespeicherten Inbetriebnahmedaten für das neu angeschaltete Gerät bestimmt sind. Ist dies der Fall, veranlasst das erste Modul Z1 die Weiterübertragung der zwischengespeicherten Daten zu dem Gerät 130 sowie ein Ablegen der Daten in dessen Speicher 135.

Für den Benutzer bedeutet diese Lösung somit auch , dass nach Abschluss der Übertragung der Daten an das erste Modul Z1 der Zugriffsapplikation, das Bediengerät 300 nicht mehr mit dem übergelagerten Gerät 200 verbunden sein muss.

Zusammenfassend ist somit ein Automatisierungssystem bereitgestellt, welches ein übergelagertes Gerät 200 und wenigstens ein diesem untergelagertes Gerät 110, 120, 130 umfasst und wobei ein Funktionsmodul 118, 128, 138 als Teil des wenigstens einen untergelagerten Geräts 110, 120, 130 und zum Ausführen wenigstens einer Gerätefunktion ausgebildet ist.

Basierend auf einem solchem Automatisierungssystem wird gemäß vorstehender Beschreibung ein Verfahren zum Zugreifen auf das Funktionsmodul 118, 128, 138 dieses Automatisierungssystems angewendet, welches die Schritte umfasst: a) Bereitstellen einer Zugriffsapplikation Z mit wenigstens einer Applikationsfunktion auf dem übergelagerten Gerät 200, wobei die Applikationsfunktion zum Zugreifen auf ein beliebiges untergelagertes Gerät und dessen Funktionsmodul anpassbar ist und wobei die Zugriffsapplikation wenigstens ein erstes Applikationsmodul Z1, Z2 umfasst; b) Bereitstellen eines Bediengeräts 300, welches Ein- und Ausgabeeinrichtungen zur Bedienung durch einen Benutzer umfasst; c) Verbinden des Bediengeräts mit dem übergelagerten Gerät über eine Kommunikationsverbindung 460; d) Ausführen des wenigstens einen ersten Applikationsmoduls auf dem übergelagerten Gerät; e) automatisches Bereitstellen einer Bedienschnittstelle der Zugriffsapplikation an dem Bediengerät; f) Auswählen einer bestimmten Applikationsfunktion mittels der Bedienschnittstelle; g) Auswählen oder Eingeben einer ein bestimmtes untergelagertes Gerät identifizierenden Information mittels der Bedienschnittstelle; h) Bereitstellen von zu der ausgewählten oder eingegebenen Identifizierungsinformation passenden, das bestimmte untergelagerte Gerät detailliert beschreibenden Daten (D); i) automatisches Anpassen der ausgewählten Applikationsfunktion und der Bedienschnittstelle für einen Zugriff auf das bestimmte untergelagerte Gerät und dessen Funktionsmodul unter Ansprechen auf die bereitgestellten, das bestimmte untergelagerte Gerät detailliert beschreibenden Daten; und j) Übertragen von Daten zwischen dem Bediengerät und dem übergelagerten Gerät, sowie dem bestimmten untergelagerten Gerät nach dessen Anschalten an das Automatisierungssystem.

Zur Durchführung dieses Verfahrens ist ferner gemäß vorstehender Beschreibung eine Vorrichtung als übergelagertes Gerät 200 dieses Automatisierungssystems ausgebildet, welche umfasst: eine erste Kommunikationsschnittstelle 265, die ausgebildet ist zum Verbinden des übergelagerten Geräts mit einem Bediengerät 300, wobei das übergelagerte Geräte zum Kommunizieren mit dem Bediengerät ausgebildet ist; wenigstens eine zweite Kommunikationsschnittstelle 266, ..., 269, die ausgebildet ist zum Verbinden des übergelagerten Geräts mit dem wenigsten einen untergelagerten Gerät, wobei das übergelagerte Geräte zum Kommunizieren mit dem wenigstens einen untergelagerten Gerät ausgebildet ist; eine Speichereinheit 255 mit einer darin gespeicherten Zugriffsapplikation Z, die wenigstens ein erstes Applikationsmodul Z1, Z2 umfasst; und eine Prozessoreinheit 260, die ausgebildet ist zum Ausführen des wenigstens einen ersten Applikationsmoduls der Zugriffsapplikation; wobei wiederum die Zugriffsapplikation ausgebildet ist: zum Bereitstellen wenigstens einer Applikationsfunktion, welche zum Zugreifen auf ein beliebiges untergelagertes Gerät und dessen Funktionsmodul anpassbar ist; zum Bereitstellen einer Bedienschnittstelle an dem Bediengerät; und zum Anpassen der Bedienschnittstelle und der wenigstens einen Applikationsfunktion für einen Zugriff auf ein bestimmtes untergelagertes Gerät und dessen Funktionsmodul unter Ansprechen auf eine das bestimmte untergelagerte Gerät identifizierende Information und auf das bestimmte untergelagerte Gerät detailliert beschreibende Daten.

## Patentansprüche

1. Verfahren zum Zugreifen auf ein Funktionsmodul (118, 128, 138) eines Automatisierungssystems, wobei das Automatisierungssystem ein übergelagertes Gerät (200) und wenigstens ein diesem untergelagertes Gerät (110, 120, 130) umfasst und wobei das Funktionsmodul (118, 128, 138) als Teil des wenigstens einen untergelagerten Geräts (110, 120, 130) und zum Ausführen wenigstens einer Gerätefunktion ausgebildet ist, umfassend die Schritte:
Bereitstellen eines Bediengeräts (300), welches Ein- und Ausgabeeinrichtungen zur Bedienung durch einen Benutzer umfasst;
Verbinden des Bediengeräts mit dem übergelagerten Gerät über eine Kommunikationsverbindung (460);
Übertragen von Daten zwischen dem Bediengerät und dem übergelagerten Gerät, sowie dem bestimmten untergelagerten Gerät nach dessen Anschalten an das Automatisierungssystem, wenn der Zugriff auf das untergelagerte Gerät ermöglicht ist;
**gekennzeichnet durch**:
a) Bereitstellen einer Zugriffsapplikation (Z) mit wenigstens einer Applikationsfunktion auf dem übergelagerten Gerät (200), wobei die Applikationsfunktion zum Zugreifen auf ein beliebiges untergelagertes Gerät und dessen Funktionsmodul anpassbar ist und wobei die Zugriffsapplikation wenigstens ein erstes Applikationsmodul (Z1, Z2) umfasst;
b) Ausführen des wenigstens einen ersten Applikationsmoduls auf dem übergelagerten Gerät, so dass
c) eine Bedienschnittstelle der Zugriffsapplikation an dem Bediengerät automatisch bereitgestellt wird, und dass, nach
d) Auswählen einer bestimmten Applikationsfunktion mittels der Bedienschnittstelle;
e) Auswählen oder Eingeben einer ein bestimmtes untergelagertes Gerät identifizierenden Information mittels der Bedienschnittstelle;
f) Bereitstellen von zu der ausgewählten oder eingegebenen Identifizierungsinformation passenden, das bestimmte untergelagerte Gerät detailliert beschreibenden Daten (D);
g) die ausgewählte Applikationsfunktion und die Bedienschnittstelle automatisch angepasst werden, so dass ein Zugriff auf das bestimmte untergelagerte Gerät und dessen Funktionsmodul unter Ansprechen auf die bereitgestellten, das bestimmte untergelagerte Gerät detailliert beschreibenden Daten ermöglicht wird.

2. Verfahren nach Anspruch 1, wobei das Automatisierungssystem mehrere dem übergelagerten Gerät untergelagerte Geräte mit jeweils einem Funktionsmodul umfasst,
und/oder
wobei die bereitgestellte Bedienschnittstelle eine GUI (graphical user interface) umfasst,
und/oder
wobei die wenigstens eine Applikationsfunktion eine Inbetriebnahmefunktion, eine Bearbeitungsfunktion, eine Überwachungsfunktion und/oder eine Analysefunktion ist,
und/oder
wobei das Bediengerät (300) ein PC, ein Laptop-, ein Tablet- oder ein Handheld-Computer ist,
und/oder
wobei zwischen den Verfahrensschritten b) und e) ein automatisches Ermitteln angeschalteter untergelagerter Geräte und ein automatischen Auslesen einer das jeweilige untergelagerte Gerät identifizierenden Information erfolgen, und wobei im Verfahrensschritt e) das Auswählen aus einer Anzahl zuvor ermittelter und ausgelesener, jeweils ein untergelagertes Gerät identifizierender Informationen erfolgt.

3. Verfahren nach einem der vorstehenden Ansprüche, wobei im Verfahrensschritt e) die Eingabe einer ein bestimmtes untergelagertes, jedoch nicht angeschaltetes Gerät (130) identifizierenden Information erfolgt.

4. Verfahren nach einem der vorstehenden Ansprüche, wobei die ein untergelagertes Gerät detailliert beschreibenden Daten in einer Speichereinheit (115, 125, 135, 255, 355) gespeichert sind, die von dem untergelagerten Gerät, dem übergelagerten Gerät, dem Bediengerät oder einem Server im Internet (500), mit dem das Bediengerät über eine weitere Kommunikationsverbindung zumindest vorübergehend verbunden ist, umfasst ist,
und/oder
wobei die ein untergelagertes Gerät detailliert beschreibenden Daten in einer transportablen Speichereinheit (80), insbesondere einer Diskette, CD, DVD oder einem Flash-Speicher-Stick gespeichert sind, die mittels einer von dem Bediengerät umfassten geeigneten Leseeinrichtung (380) auslesbar sind, und/oder
wobei im Schritt f) das Bereitstellen automatisch durchgeführt wird, soweit die das bestimmte untergelagerte Gerät detailliert beschreibenden Daten in einer durch das übergelagerte Gerät auslesbaren Speichereinheit gespeichert sind,
und/oder
wobei die ein untergelagertes Gerät detailliert beschreibenden Daten (D) als GSD-Datei (general stationd description) oder IODD-Datei (IO device description) und/oder im JSON-Format (JavaScript Object Notation) vorliegen,
und/oder
wobei beim Übertragen von Daten zwischen dem Bediengerät und dem übergelagerten Gerät, sowie dem bestimmten untergelagerten Gerät nach dessen Anschalten an das Automatisierungssystem das Übertragen von Daten in Antwort auf Benutzereingaben durchgeführt wird, die mittels der Bedienschnittstelle erfolgten,
und/oder
wobei beim Übertragen von Daten zwischen dem Bediengerät und dem übergelagerten Gerät, sowie dem bestimmten untergelagerten Gerät nach dessen Anschalten an das Automatisierungssystem die zu dem bestimmten untergelagerten Gerät zu übertragenden Daten die das Gerät detailliert beschreibenden Daten umfassen und wobei zumindest die das bestimmte untergelagerte Gerät detailliert beschreibenden Daten in einer von dem übergelagerten Gerät umfassten Speichereinheit gespeichert werden.

5. Verfahren nach Anspruch 3, wobei beim Übertragen von Daten zwischen dem Bediengerät und dem übergelagerten Gerät, sowie dem bestimmten untergelagerten Gerät nach dessen Anschalten an das Automatisierungssystem die zu dem bestimmten untergelagerten Gerät zu übertragenden Daten, welche die das Gerät detailliert beschreibenden Daten umfassen, in einer von dem übergelagerten Gerät umfassten Speichereinheit zwischengespeichert werden, und wobei die zwischengespeicherten Daten zu dem bestimmten untergelagerten Gerät übertragen werden, nachdem ein automatisches Erkennen des Geräts als angeschaltetes Gerät anhand der das Gerät identifizierenden Information erfolgte.

6. Verfahren nach einem der vorstehenden Ansprüche, wobei beim Übertragen von Daten zwischen dem Bediengerät und dem übergelagerten Gerät, sowie dem bestimmten untergelagerten Gerät nach dessen Anschalten an das Automatisierungssystem die zu dem bestimmten untergelagerten Gerät übertragenen Daten, welche die das Gerät detailliert beschreibenden Daten umfassen, in einer von dem untergelagerten Gerät umfassten Speichereinheit gespeichert werden.

7. Verfahren nach einem der vorstehenden Ansprüche, wobei wenigstens ein zweites Applikationsmodul (Z2) der Zugriffsapplikation zu dem Bediengerät übertragen und auf diesem ausgeführt wird.

8. Verfahren nach einem der vorstehenden Ansprüche, wobei im Verfahrensschritt b) das wenigstens eine erste Applikationsmodul in Zusammenwirken mit einer ebenfalls auf dem übergelagerten Gerät bereitgestellten und ausgeführten Server-Applikation, insbesondere Webserver-Applikation (WS), ausgeführt wird.

9. Verfahren nach Anspruch 8, wobei im Verfahrensschritt c) die Bedienschnittstelle der Zugriffsapplikation in Zusammenwirken mit einer auf dem Bediengerät bereitgestellten und ausgeführten Webbrowser-Applikation (WB) bereitgestellt wird.

10. Verfahren nach den Ansprüchen 7, 8 und 9, wobei das wenigstens eine zweite Applikationsmodul (Z2) auf Java-Applets oder AJAX-Technologien (Asynchronous Javascript and XML) beruht.

11. Vorrichtung, welche als übergelagertes Gerät (200) eines Automatisierungssystems ausgebildet ist, wobei dem übergelagerten Gerät wenigstens ein Gerät (110, 120, 130), umfassend ein Funktionsmodul (118, 128, 138) zum Ausführen wenigstens einer Gerätefunktion, untergelagert ist und wobei das übergelagerte Gerät zur Durchführung des Verfahrens zumindest nach Anspruch 1 ausgebildet ist, umfassend
- eine erste Kommunikationsschnittstelle (265), die ausgebildet ist zum Verbinden des übergelagerten Geräts mit einem Bediengerät (300), wobei das übergelagerte Geräte zum Kommunizieren mit dem Bediengerät ausgebildet ist;
- wenigstens eine zweite Kommunikationsschnittstelle (266, ..., 269), die ausgebildet ist zum Verbinden des übergelagerten Geräts mit dem wenigsten einen untergelagerten Gerät, wobei das übergelagerte Geräte zum Kommunizieren mit dem wenigstens einen untergelagerten Gerät ausgebildet ist;
- eine Speichereinheit (255) mit einer darin gespeicherten Zugriffsapplikation (Z), die wenigstens ein erstes Applikationsmodul (Z1, Z2) umfasst;
**gekennzeichnet durch**
- eine Prozessoreinheit (260), die ausgebildet ist zum Ausführen des wenigstens einen ersten Applikationsmoduls der Zugriffsapplikation; wobei
- die Zugriffsapplikation ausgebildet ist zum Bereitstellen wenigstens einer Applikationsfunktion, welche zum Zugreifen auf ein beliebiges untergelagertes Gerät und dessen Funktionsmodul anpassbar ist;
- die Zugriffsapplikation ausgebildet ist zum Bereitstellen einer Bedienschnittstelle an dem Bediengerät;
- die Zugriffsapplikation ausgebildet ist zum Anpassen der Bedienschnittstelle und der wenigstens einen Applikationsfunktion für einen Zugriff auf ein bestimmtes untergelagertes Gerät und dessen Funktionsmodul unter Ansprechen auf eine das bestimmte untergelagerte Gerät identifizierende Information und auf das bestimmte untergelagerte Gerät detailliert beschreibende Daten.

12. Vorrichtung nach Anspruch 11, wobei diese Vorrichtung als speicherprogrammierbare Steuerung (SPS) oder als Buskoppler ausgebildet ist,
und/oder
wobei die Zugriffsapplikation ausgebildet ist zum Bereitstellen einer eine GUI umfassenden Bedienschnittstelle,
und/oder
wobei die Zugriffsapplikation ausgebildet ist zum Bereitstellen einer Inbetriebnahmefunktion, einer Bearbeitungsfunktion, einer Überwachungsfunktion und/oder einer Analysefunktion als die wenigstens eine Applikationsfunktion,
und/oder
wobei in der Speichereinheit des übergelagerten Geräts eine weitere Applikation (A) gespeichert ist, welche von der Prozessoreinheit ausführbar ist und welche als Applikationsfunktion eine Steuerungsfunktion zur Steuerung wenigstens eines Teils des Automatisierungssystems umfasst,
und/oder
wobei diese Vorrichtung als IO-Link-Master ausgebildet ist, und wobei die wenigstens eine zweite Kommunikationsschnittstelle gemäß IO-Link-Standard ausgebildet ist,
und/oder
wobei dieser Vorrichtung mehrere Geräte mit je einem Funktionsmodul untergelagert sind und wobei die untergelagerten Geräte gemeinsam, insbesondere über einen Bus, mit der wenigstens einen zweiten Kommunikationsschnittstelle des übergelagerten Geräts verbunden sind und/oder eine Anzahl von untergelagerten Geräten mit jeweils einer weiteren zweiten Kommunikationsschnittstelle des übergelagerten Geräts einzeln verbunden ist,
und/oder
wobei die erste Kommunikationsschnittstelle für eine kabelgebundene oder kabellose Verbindung mit dem Bediengerät ausgebildet ist,
und/oder
wobei die erste Kommunikationsschnittstelle gemäß Ethernet-Standard und/oder für eine TCP/IP-basierte Datenübertragung ausgebildet ist,
und/oder
wobei die Zugriffsapplikation ferner ausgebildet ist zum Ermitteln angeschalteter untergelagerter Geräte und zum Auslesen wenigstens einer das jeweilige untergelagerte Gerät identifizierenden Information, und/oder
wobei die Zugriffsapplikation ferner ausgebildet ist, die ein untergelagertes Gerät detailliert beschreibenden Daten aus einer Speichereinheit, in der sie gespeichert sind, auszulesen, wobei dies die Speichereinheit (255) des übergelagerten Geräts oder eine Speichereinheit (115, 125, 355, 500) sein kann, die umfasst ist von dem untergelagerten Gerät, dem Bediengerät oder einem Server im Internet, mit dem das Bediengerät über eine Kommunikationsverbindung zumindest vorübergehend verbunden ist, und wobei die ein untergelagertes Gerät detailliert beschreibenden Daten als GSD-Datei oder IODD-Datei und/oder im JSON-Format vorliegen,
und/oder
wobei die Zugriffsapplikation ferner ausgebildet ist zum Bewirken einer Datenübertragung zwischen dem Bediengerät und dem untergelagerten Gerät in Antwort auf Benutzereingaben die mittels der Bedienschnittstelle erfolgten,
und/oder
wobei die Zugriffsapplikation ausgebildet ist zum Bewirken eines Speicherns in der Speichereinheit des übergelagerten Geräts und zwar zumindest der das bestimmte untergelagerte Gerät detailliert beschreibenden Daten, die umfasst sind von zu dem bestimmten untergelagerten Gerät zu übertragenden Daten,
und/oder
wobei die Zugriffsapplikation ausgebildet ist zum Bewirken eines Zwischenspeicherns in der Speichereinheit des übergelagerten Geräts und zwar der zu einem bestimmten untergelagerten Gerät zu übertragenden Daten, welche die das Gerät detailliert beschreibenden Daten umfassen, und wobei die Zugriffsapplikation ferner ausgebildet ist zum Erkennen des bestimmten untergelagerten Geräts als angeschaltetes Gerät anhand der das Gerät identifizierenden Information, und zum darauffolgenden Bewirken einer Übertragung der zwischengespeicherten Daten zu dem bestimmten untergelagerten Gerät,
und/oder
wobei die Zugriffsapplikation ausgebildet ist zum Bewirken eines Speicherns in einer Speichereinheit des bestimmten untergelagerten Geräts und zwar der zu dem Gerät übertragenen Daten, welche die das Gerät detailliert beschreibenden Daten umfassen.

13. Vorrichtung nach einem der vorstehenden Ansprüche, wobei das übergelagerte Gerät ausgebildet ist zum Übertragen wenigstens eines zweiten Applikationsmoduls (Z2) der Zugriffsapplikation zu dem Bediengerät für ein Ausführen des Applikationsmoduls auf dem Bediengerät und wobei die Applikationsmodule zur Kommunikation miteinander ausgebildet sind.

14. Vorrichtung nach einem der vorstehenden Ansprüche, ferner umfassend eine in der Speichereinheit des übergelagerten Geräts gespeicherte Server-Applikation, insbesondere Webserver-Applikation (WS), wobei die Prozessoreinheit zum Ausführen der Server-Applikation ausgebildet ist, und wobei die Zugriffsapplikation angepasst ist zum Zusammenwirken mit der Server-Applikation.

15. Vorrichtung nach Anspruch 14, wobei die Zugriffsapplikation ausgebildet ist zum Bereitstellen der Bedienschnittstelle in Zusammenwirken mit einer auf dem Bediengerät ausgeführten Webbrowser-Applikation (WB).

16. Vorrichtung nach den Ansprüchen 13, 14 und 15 wobei das wenigstens eine zweite Applikationsmodul auf Java-Applets oder AJAX-Technologien beruht.

## Claims

1. Method for accessing a functional module (118, 128, 138) of an automation system, wherein the automation system comprises a higher-level device (200) and at least one lower-level device (110, 120, 130) arranged under this higher-level device and wherein the functional module (118, 128, 138) is designed as part of the at least one lower-level device (110, 120, 130) and is designed to execute at least one device function, comprising the steps of:
providing an operating device (300) which comprises input and output devices for operation by a user;
connecting the operating device to the higher-level device via a communications connection (460);
transmitting data between the operating device and the higher-level device, and the specific lower-level device after same has been connected to the automation system if the access to the lower-level device is permitted;
**characterised by**:
a) providing an access application (Z) with at least one application function on the higher-level device (200), wherein the application function can be adapted for accessing an arbitrary lower-level device and its functional module and wherein the access application comprises at least one first application module (Z1, Z2);
b) executing the at least one first application module on the higher-level device, so that
c) an operating interface of the access application is automatically provided on the operating device, and that after
d) selecting a specific application function by means of the operating interface;
e) selecting or inputting information, which identifies a specific lower-level device, by means of the operating interface;
f) providing data (D) which match the selected or input identification information and describe the specific lower-level device in detail;
g) the selected application function and the operating interface are automatically adapted, so that access to the specific lower-level device and its functional module is permitted in response to the provided data which describe the specific lower-level device in detail.

2. Method as claimed in claim 1, wherein the automation system comprises several lower-level devices which are arranged below the higher-level device and each have a functional module,
and/or
wherein the provided operating interface comprises a GUI (graphical user interface), and/or
wherein the at least one application function is a start-up function, a processing function, a monitoring function, and/or an analysis function,
and/or
wherein the operating device (300) is a PC, a laptop, a tablet, or a handheld computer, and/or
wherein between method steps b) and e) connected, lower-level devices are automatically detected and information identifying the respective lower-level device is automatically read out, and wherein in method step e) a selection is made from a number of previously detected and read-out pieces of information which each identify a lower-level device.

3. Method as claimed in any one of the preceding claims, wherein in method step e) information which identifies a specific lower-level device (130) which, however, is not connected is input.

4. Method as claimed in any one of the preceding claims, wherein the data which describe a lower-level device in detail are stored in a storage unit (115, 125, 135, 255, 355) which is included in the lower-level device, the higher-level device, the operating device, or a server on the Internet (500), to which the operating device is at least temporarily connected via a further communications connection,
and/or
wherein the data which describe a lower-level device in detail are stored in a transportable storage unit (80), in particular a diskette, CD, DVD or a flash-memory stick, which can be read out by means of a suitable reading device (380) included in the operating device,
and/or
wherein in step f) the provision is effected automatically if the data which describe the specific lower-level device in detail are stored in a storage unit which can be read out by the higher-level device,
and/or
wherein the data (D) which describe the lower-level device in detail are present as a GSD file (general station description) or IODD file (IO device description) and/or in the JSON format (JavaScript Object Notation),
and/or
wherein during the transmission of data between the operating device and the higher-level device, and the specific lower-level device after same has been connected to the automation system data are transmitted in response to user inputs which are effected by means of the operating interface,
and/or
wherein during the transmission of data between the operating device and the higher-level device, and the specific lower-level device after same has been connected to the automation system the data to be transmitted to the specific lower-level device comprise the data which describe the device in detail and wherein at least the data which describe the specific lower-level device in detail are stored in a storage unit included in the higher-level device.

5. Method as claimed in claim 3, wherein during the transmission of data between the operating device and the higher-level device, and the specific lower-level device after same has been connected to the automation system the data which are to be transmitted to the specific lower-level device and comprise the data which describe the device in detail are buffered in a storage unit included in the higher-level device, and wherein the buffered data are transmitted to the specific lower-level device after the device has been automatically detected as a connected device using the information which identifies the device.

6. Method as claimed in any one of the preceding claims, wherein during the transmission of data between the operating device and the higher-level device, and the specific lower-level device after same has been connected to the automation system the data which are transmitted to the specific lower-level device and comprise the data which describe the device in detail are stored in a storage unit included in the lower-level device.

7. Method as claimed in any one of the preceding claims, wherein at least one second application module (Z2) of the access application is transmitted to the operating device and executed thereon.

8. Method as claimed in any one of the preceding claims, wherein in method step b) the at least one first application module is executed in co-operation with a server application, in particular a Web-server application (WS), which is likewise provided and executed on the higher-level device.

9. Method as claimed in claim 8, wherein in method step c) the operating interface of the access application is provided in co-operation with a Web-browser application (WB) provided and executed on the operating device.

10. Method as claimed in claims 7, 8 and 9, wherein the at least one second application module (Z2) is based upon Java Applets or AJAX technologies (Asynchronous JavaScript and XML).

11. Device which is designed as a higher-level device (200) of an automation system, wherein at least one device (110, 120, 130) comprising a functional module (118, 128, 138) for executing at least one device function is arranged under the higher-level device, and wherein the higher-level device is designed to perform the method at least as claimed in claim 1, comprising
- a first communications interface (265) which is designed to connect the higher-level device to an operating device (300), wherein the higher-level device is designed to communicate with the operating device;
- at least one second communications interface (266, ... , 269) which is designed to connect the higher-level device to the at least one lower-level device, wherein the higher-level device is designed to communicate with the at least one lower-level device;
- a storage unit (255) with an access application (Z) which is stored therein and comprises at least one first application module (Z1, Z2);
**characterised by**
- a processor unit (260) which is designed to execute the at least one first application modules of the access application; wherein
- the access application is designed to provide at least one application function which can be adapted for accessing an arbitrary lower-level device and its functional module;
- the access application is designed to provide an operating interface on the operating device;
- the access application is designed to adapt the operating interface and the at least one application function for access to a specific lower-level device and its functional module in response to information which identifies the specific lower-level device, and to data which describe the specific lower-level device in detail.

12. Device as claimed in claim 11, wherein this device is designed as a memory-programmable controller (SPS) or as a bus coupler,
and/or
wherein the access application is designed to provide an operating interface comprising a GUI,
and/or
wherein the access application is designed to provide a start-up function, a processing function, a monitoring function, and/or an analysis function as the at least one application function,
and/or
wherein in the storage unit of the higher-level device, a further application (A) is stored which can be executed by the processor unit and comprises, as an application function, a control function for controlling at least one part of the automation system, and/or
wherein this device is designed as an IO-link master and wherein the at least one second communications interface is designed in accordance with the IO-link standard, and/or
wherein arranged under this device are several devices which each have a functional module and wherein the lower-level devices are connected jointly, in particular via a bus, to the at least one second communications interface of the higher-level device and/or a number of lower-level devices are each connected individually to a further second communications interface of the higher-level device,
and/or
wherein the first communications interface is designed for a wired or wireless connection to the operating device,
and/or
wherein the first communications interface is designed in accordance with the Ethernet standard and/or for a TCP/IP-based data transmission,
and/or
wherein the access application is further designed to detect connected lower-level devices and to read out at least one piece of information which identifies the respective lower-level device,
and/or
wherein the access application is further designed to read out the data, which describe the lower-level device in detail, from a storage unit in which they are stored, wherein this can be the storage unit (Z55) of the higher-level device or a storage unit (115, 125, 355, 500) included in the lower-level device, the operating device or a server on the Internet, to which the operating device is connected at least temporarily via a communications connection, and wherein the data which describe a lower-level device in detail are present as a GSD file or an IODD file and/or in the JSON format, and/or
wherein the access application is further designed to effect data transmission between the operating device and the lower-level device in response to user inputs performed by means of the operating interface,
and/or
wherein the access application is designed to effect storage in the storage unit of the higher-level device, and moreover at least the data which describe the specific lower-level device in detail and which are included in data to be transmitted to the specific lower-level device,
and/or
wherein the access application is designed to effect buffering in the storage unit of the higher-level device, and moreover the data which are to be transmitted to a specific lower-level device and which comprise the data which describe the device in detail, and wherein the access application is further designed to detect the specific lower-level device as a connected device using the information which identifies the device, and to subsequently effect transmission of the buffered data to the specific lower-level device,
and/or
wherein the access application is designed to effect storage in a storage unit of the specific lower-level device, and moreover the data which are transmitted to the device and which comprise the data which describe the device in detail.

13. Device as claimed in any one of the preceding claims, wherein the higher-level device is designed to transmit at least one second application module (Z2) of the access application to the operating device for executing the application module on the operating device and wherein the application modules are designed to communicate with each other.

14. Device as claimed in any one of the preceding claims, further comprising a server application, in particular a Web-server application (WS), which is stored in the storage unit of the higher-level device, wherein the processor unit is designed to execute the server application, and wherein the access application is adapted to cooperate with the server application.

15. Device as claimed in claim 14, wherein the access application is designed to provide the operating interface in co-operation with a Web-browser application (WB) which is executed on the operating device.

16. Device as claimed in claims 13, 14 and 15, wherein the at least one second application module is based upon Java Applets or AJAX technologies.

## Revendications

1. Procédé pour recourir à un module fonctionnel (118, 128, 138) d'un système d'automatisation, le système d'automatisation comprenant un appareil placé en amont (200) et au moins un appareil (110, 120, 130) placé en aval de celui-ci et le module fonctionnel (118, 128, 138) étant conçu sous forme d'une partie de l'au moins un appareil (110, 120, 130) placé en aval et pour l'exécution d'au moins une fonction d'appareil, comprenant les étapes suivantes :
mise à disposition d'un appareil de commande (300), qui comprend des dispositifs d'entrée et de sortie pour la commande par un utilisateur ;
liaison de l'appareil de commande avec l'appareil placé en amont par une liaison de communication (460) ;
transmission de données entre l'appareil de commande et l'appareil placé en amont, et l'appareil défini et placé en aval après son rattachement au système d'automatisation, lorsque l'accès à l'appareil placé en aval est rendu possible ;
**caractérisé par** :
a) la mise à disposition d'une application d'accès (Z) avec au moins une fonction d'application sur l'appareil (200) placé en amont, la fonction d'application pouvant être adaptée pour le recours à un appareil quelconque placé en aval et à son module fonctionnel, et l'application d'accès comprenant au moins un premier module d'application (Z1, Z2) ;
b) la mise en oeuvre de l'au moins un premier module d'application sur l'appareil placé en amont, de sorte
c) qu'une interface de commande de l'application d'accès est mise à disposition automatiquement sur l'appareil de commande, et en ce que, après
d) la sélection d'une fonction d'application définie au moyen de l'interface de commande ;
e) la sélection ou l'entrée d'une information identifiant un appareil défini et placé en aval au moyen de l'interface de commande ;
f) la mise à disposition de données (D) s'adaptant à l'information d'identification sélectionnée ou entrée et décrivant de façon détaillée l'appareil défini et placé en aval ;
g) la fonction d'application sélectionnée et l'interface de commande sont adaptées automatiquement, de sorte qu'un recours à l'appareil défini et placé en aval et son module fonctionnel en réaction aux données mises à disposition et décrivant de façon détaillée l'appareil défini et placé en aval, est rendu possible.

2. Procédé selon la revendication 1, le système d'automatisation comprenant plusieurs appareils placés en aval de l'appareil placé en amont et comprenant chacun un module de fonction,
et/ou
l'interface de commande mise à disposition comprenant une GUI (graphical user interface),
et/ou
l'au moins une fonction d'application étant une fonction de mise en service, une fonction de traitement, une fonction de contrôle et/ou une fonction d'analyse
et/ou
l'appareil de commande (300) étant un PC, un laptop, un ordinateur à tablette ou un ordinateur potable,
et/ou
une détermination automatique d'appareils rattachés et placés en aval et une lecture automatique d'une information identifiant l'appareil concerné et placé en aval s'effectuant entre les étapes de procédés b) et e), et la sélection à partir d'un certain nombre d'informations déterminées et lues auparavant, identifiant à chaque fois un appareil placé en aval, s'effectuant dans l'étape de procédé e).

3. Procédé selon l'une des revendications précédentes, l'entrée d'une information identifiant un appareil (130) défini et placé en aval, mais non rattaché, s'effectuant dans l'étape de procédé e).

4. Procédé selon l'une des revendications précédentes, les données décrivant de façon détaillée un appareil placé en aval étant stockées dans une unité de mémoire (115, 125, 135, 255, 355), laquelle est englobée par l'appareil placé en aval, l'appareil placé en amont, l'appareil de commande ou un serveur sur Internet (500), avec lequel l'appareil de commande est relié de façon au moins provisoirement par une autre liaison de communication,
et/ou
les données décrivant de façon détaillée un appareil placé en aval étant stockées dans une unité de mémoire (80) transportable, en particulier une disquette, un CD, un DVD ou une clé à mémoire flash, lesquelles données peuvent être lues au moyen d'un dispositif de lecture (380) approprié et englobé par l'appareil de commande,
et/ou
la mise à disposition étant effectuée automatiquement dans l'étape f), dans la mesure où les données décrivant de façon détaillée l'appareil défini et placé en aval sont stockées dans une unité de mémoire pouvant être lue par l'appareil placé en amont,
et/ou
les données (D) décrivant de façon détaillée un appareil placé en aval étant présentes sous forme de fichier GSD (General Station Description) ou fichier IODD (IO Device Description) et/ou dans le format JSON (JavaScript Object Notation),
et/ou
la transmission de données étant effectuée, lors de la transmission de données entre l'appareil de commande et l'appareil placé en amont, ainsi qu' à l'appareil défini et placé en aval après son rattachement au système d'automatisation, en réponse à des entrées d'utilisateur qui ont été effectuées au moyen de l'interface de commande,
et/ou
les données à transmettre à l'appareil défini et placé en aval comprenant les données décrivant l'appareil de façon détaillée lors de la transmission de données entre l'appareil de commande et l'appareil placé en amont, et l'appareil défini et placé en aval après son rattachement au système d'automatisation, et au moins les données décrivant de façon détaillée l'appareil défini et placé en aval étant stockées dans une unité de mémoire englobée par l'appareil placé en amont.

5. Procédé selon la revendication 3, les données à transmettre à l'appareil défini et placé en aval, qui comprennent les données décrivant l'appareil de façon détaillée, étant stockées provisoirement dans une unité de mémoire englobée par l'appareil placé en amont, lors de la transmission de données entre l'appareil de commande et l'appareil placé en amont, ainsi qu'à l'appareil défini et placé en aval après son rattachement au système d'automatisation, et les données stockées provisoirement étant transmises à l'appareil défini et placé en aval, après qu'une identification automatique de l'appareil en tant qu'appareil rattaché ait été effectuée à l'aide de l'information identifiant l'appareil.

6. Procédé selon l'une des revendications précédentes, les données transmises à l'appareil défini et placé en aval, qui comprennent les données décrivant l'appareil de façon détaillée, étant stockées dans une unité de mémoire englobée par l'appareil placé en aval lors de la transmission de données entre l'appareil de commande et l'appareil placé en amont, ainsi qu'à l'appareil défini et placé en aval après son rattachement au système d'automatisation.

7. Procédé selon l'une des revendications précédentes, au moins un second module d'application (Z2) de l'application d'accès étant transmis à l'appareil de commande et étant mis en oeuvre sur celui-ci.

8. Procédé selon l'une des revendications précédentes, l'au moins un premier module d'application étant mis en oeuvre lors de l'étape de procédé b) en interaction avec une application de serveur mise à disposition et réalisée également sur l'appareil placé en amont, en particulier une application de serveur web (WS).

9. Procédé selon la revendication 8, l'interface de commande de l'application d'accès étant mise à disposition lors de l'étape de procédé c) en interaction avec une application de serveur web (WB) mise à disposition et réalisée sur l'appareil de commande.

10. Procédé selon les revendications 7, 8 et 9, l'au moins un second module d'application (Z2) reposant sur des applets Java ou des technologies AJAX (Asynchronous Javascript et XML).

11. Dispositif, qui est conçu sous forme d'appareil (200) placé en amont d'un système d'automatisation, au moins un appareil (110, 120, 130) comprenant un module de fonction (118, 128, 138) et destiné à l'exécution d'au moins une fonction d'appareil, étant placé en aval de l'appareil placé en amont et l'appareil placé en amont étant réalisé pour la mise en oeuvre du procédé au moins selon la revendication 1, comprenant :
- une première interface de communication (265), qui est conçue pour la liaison de l'appareil placé en amont avec un appareil de commande (300), l'appareil placé en amont étant conçu pour communiquer avec l'appareil de commande,
- au moins une seconde interface de communication (266, ..., 269), qui est conçue pour la liaison de l'appareil placé en amont avec l'au moins un appareil placé en aval, l'appareil placé en amont étant conçu pour communiquer avec l'au moins un appareil placé en aval ;
- une unité de mémoire (255) avec une application d'accès (Z) stockée à l'intérieur, qui comprend au moins un premier module d'application (Z1, Z2) ;
**caractérisé par** :
- une unité de processeur (260), qui est conçue pour la mise en oeuvre de l'au moins un premier module d'application de l'application d'accès ;
- l'application d'accès étant conçue pour la mise à disposition d'au moins une fonction d'application qui peut être adaptée pour le recours à un appareil quelconque et placé en aval et à son module de fonction ;
- l'application d'accès étant conçue pour la mise à disposition d'une interface de commande sur l'appareil de commande ;
- l'application d'accès étant conçue pour l'adaptation de l'interface de commande et de l'au moins une fonction d'application pour un accès à un appareil défini et placé en amont et à son module fonctionnel en réaction à une information identifiant l'appareil défini et placé en aval et à des données décrivant de façon détaillée l'appareil défini et placé en aval.

12. Dispositif selon la revendication 11, ce dispositif étant conçu comme commande à programme enregistré (SPS) ou sous forme de coupleur de bus,
et/ou
l'application d'accès étant conçue pour la mise à disposition d'une interface de commande comprenant une GUI,
et/ou
l'application d'accès étant conçue pour la mise à disposition d'une fonction de mise en service, d'une fonction de traitement, d'une fonction de contrôle et/ou d'une fonction d'analyse sous la forme de l'au moins une fonction d'application,
et/ou
une autre application (A) étant stockée dans l'unité de mémoire de l'appareil placé en amont, laquelle application peut être exécutée par l'unité de processeur et qui comprend comme fonction d'application une fonction de commande pour la commande d'au moins une partie du système d'automatisation,
et/ou
ce dispositif étant conçu sous forme de maître 10-Link, et l'au moins une seconde interface de communication étant conçue selon la norme IO-Link,
et/ou
plusieurs appareils dotés chacun d'un module de fonction étant placés en aval de ce dispositif et les appareils placés en aval étant reliés conjointement, en particulier par un bus, à l'au moins une seconde interface de communication de l'appareil placé en amont et/ou un certain nombre d'appareils placés en aval étant reliés individuellement respectivement à une autre seconde interface de communication de l'appareil placé en amont,
et/ou
la première interface de communication étant conçue pour une liaison reliée par câble ou sans câble avec l'appareil de commande,
et/ou
la première interface de communication étant conçue selon la norme Ethernet et/ou pour une transmission de données basée sur TCP/IP,
et/ou
l'application d'accès étant conçue également pour la détermination d'appareils rattachés et placés en aval et pour la lecture d'au moins une information identifiant l'appareil respectif et placé en aval,
et/ou
l'application d'accès étant conçue également pour extraire les données décrivant de façon détaillée un appareil placé en aval d'une unité de mémoire dans laquelle elles sont stockées, sachant qu'il peut s'agir ici de l'unité de mémoire (255) de l'appareil placé en amont ou d'une unité de mémoire (115, 125, 355, 500) qui est englobée par l'appareil placé en aval, l'appareil de commande ou un serveur sur Internet, avec lequel l'appareil de commande est relié au moins de façon provisoire par une liaison de communication, et les données décrivant de façon détaillée un appareil placé en aval étant présentes sous forme de fichier GSD ou de fichier IODD et/ou dans le format JSON,
et/ou
l'application d'accès étant conçue également pour entraîner une transmission de données entre l'appareil de commande et l'appareil placé en aval en réponse à des entrées d'utilisateurs qui ont été effectuées au moyen de l'interface de commande,
et/ou
l'application d'accès étant conçue pour entraîner un stockage dans l'unité de mémoire de l'appareil placé en aval, à savoir au moins des données décrivant de façon détaillée l'appareil défini et placé en aval, qui sont englobées par des données à transmettre à l'appareil défini et placé en aval,
et/ou
l'application d'accès étant conçue pour la réalisation d'un stockage provisoire dans l'unité de mémoire de l'appareil placé en amont, à savoir des données à transmettre à un appareil défini et placé en aval, qui englobent les données décrivant l'appareil de façon détaillée, et l'application d'accès étant conçue également pour reconnaitre l'appareil défini et placé en aval comme appareil rattaché à l'aide de l'information identifiant l'appareil, et pour l'obtention consécutive d'une transmission des données stockées provisoirement à l'appareil défini et placé en aval,
et/ou
l'application d'accès étant conçue pour la réalisation d'un stockage dans une unité de mémoire de l'appareil défini et placé en aval, à savoir des données transmises à l'appareil, qui englobent les données décrivant l'appareil de façon détaillée.

13. Dispositif selon l'une des revendications précédentes, l'appareil placé en amont étant conçu pour la transmission d'au moins un second module d'application (Z2) de l'application d'accès à l'appareil de commande pour une mise en oeuvre du module d'application sur l'appareil de commande, et les modules d'application étant conçus pour la communication les uns avec les autres.

14. Dispositif selon l'une des revendications précédentes, comprenant également une application de serveur stockée dans l'unité de mémoire de l'appareil placé en amont, en particulier une application de serveur web (WS), l'unité de processeur étant conçue pour la mise en oeuvre de l'application de serveur, et l'application d'accès étant adaptée pour l'interaction avec l'application de serveur.

15. Dispositif selon la revendication 14, l'application d'accès étant conçue pour la mise à disposition de l'interface de commande en interaction avec une application de serveur web (WB) mise en oeuvre sur l'appareil de commande.

16. Dispositif selon les revendications 13, 14 et 15, l'au moins un second module d'application reposant sur des applets Java ou des technologies AJAX.
